# EUROPÄISCHE PATENTANMELDUNG

(11) **EP 1 526 597 A1**
(43) Veröffentlichungstag der Anmeldung: **27.04.2005**
(21) Anmeldenummer: 04024955.9
(22) Anmeldetag: 20.10.2004
(51) Int. Cl.: H01M 8/04, H01M 8/02

(54) **Befeuchtungsvorrichtung für Medienströme in Brennstoffzellen**

(30) Priorität: 25.10.2003 DE 10349831
(71) Anmelder: P 21-Power for the 21st Century GmbH, 85649 Brunnthal (DE)
(72) Erfinder: Schreiber, Jörg, 73447 Oberkochen (DE)
(74) Vertreter: Müller, Thomas, Dipl.-Ing.

(57) **Zusammenfassung**

Die Erfindung ist gerichtet auf eine Vorrichtung (1) zur Befeuchtung eines in mindestens einem Medienkanal (2) befindlichen ersten Mediums durch Feuchtigkeit aus einem in zumindest einem zweiten Medienkanal (3) befindlichen zweiten Medium, dadurch gekennzeichnet, dass ein, eine kapillarbildende Struktur (15) und eine feuchtigkeitsdurchlässige Membran (14) aufweisendes Trennelement (4) die zumindest zwei Medienkanäle zumindest über einen Teil einer gemeinsamen Kanalwandung miteinander so verbindet, dass kondensierte Feuchtigkeit durch die kapillarbildende Struktur (15) und die feuchtigkeitsdurchlässige Membran (14) zum Medium geringerer Feuchte transportiert wird. Die erfindungsgemäße Vorrichtung kann beispielsweise bei der Anfeuchtung des Oxidationsmittels für Brennstoffzellen verwendet werden.

## Beschreibung

Die vorliegende Erfindung betrifft eine Befeuchtungsvorrichtung zur Befeuchtung eines Medienstroms mit aus einem feuchteren Medienstrom kondensierter Feuchtigkeit. Insbesondere betrifft die vorliegende Erfindung eine Befeuchtungsvorrichtung für eine Brennstoffzelle.

Brennstoffzellensysteme sind bereits seit langem bekannt und haben in den letzten Jahren erheblich an Bedeutung gewonnen. Ähnlich wie Batteriesysteme erzeugen Brennstoffzellen elektrische Energie auf chemischem Weg durch eine Redoxreaktion von Wasserstoff und Sauerstoff, wobei die einzelnen Reaktanten kontinuierlich zugeführt und die Reaktionsprodukte kontinuierlich abgeführt werden.

Bei einer Brennstoffzelle werden die zwischen elektrisch neutralen Molekülen oder Atomen ablaufenden Oxidations- und Reduktionsprozesse in der Regel über einen Elektrolyten räumlich getrennt. Eine Brennstoffzelle besteht grundsätzlich aus einem Anodenteil, an den ein Brennstoff zugeführt wird. Weiterhin weist die Brennstoffzelle einen Kathodenteil auf, an dem ein Oxidationsmittel zugeführt wird. Räumlich getrennt sind der Anoden- und Kathodenteil durch den Elektrolyten. Bei einem derartigen Elektrolyten kann es sich beispielsweise um eine Membran handeln. Solche Membranen haben die Fähigkeit, lonen durchzuleiten, Gase jedoch zurückzuhalten. Die bei der Oxidation abgegebenen Elektronen werden nicht lokal von Atom zu Atom übertragen, sondern als elektrischer Strom durch einen Verbraucher geleitet.

Als gasförmiger Reaktionspartner für die Brennstoffzelle können beispielsweise Wasserstoff als Brennstoff und Sauerstoff als Oxidationsmittel im Kathodenteil verwendet werden.

Will man die Brennstoffzelle mit einem leicht verfügbaren oder leichter zu speichernden Brennstoff, wie etwa Erdgas, Methanol, Propan, Benzin, Diesel oder anderen Kohlenwasserstoffen, anstelle von Wasserstoff betreiben, muss man den Kohlenwasserstoff in einer Vorrichtung zum Erzeugen/Aufbereiten eines Brennstoffs in einem so genannten Reformierungsprozess zunächst in ein wasserstoffreiches Gas umwandeln. Diese Vorrichtung zum Erzeugen/Aufbereiten eines Brennstoffs besteht beispielsweise aus einer Dosiereinheit mit Verdampfer, einem Reaktor für die Reformierung, beispielsweise für die Wasserdampfreformierung, einer Gasreinigung sowie häufig auch wenigstens einem katalytischen Brenner zur Bereitstellung der Prozesswärme für die endothermen Prozesse, beispielsweise den Reformierungsprozess.

Ein Brennstoffzellensystem besteht in der Regel aus mehreren Brennstoffzellen, die beispielsweise wiederum aus einzelnen Schichten gebildet sein können. Die Brennstoffzellen sind vorzugsweise hintereinander angeordnet, beispielsweise sandwichartig übereinander gestapelt. Ein derart ausgebildetes Brennstoffzellensystem wird dann als Brennstoffzellenstapel beziehungsweise Brennstoffzellenstack bezeichnet.

Der Feuchtigkeitsgehalt im Inneren der Brennstoffzelle ist insbesondere bei einer PEM (proton exchange membrane, Prontonenaustauschmembran)-Brennstoffzelle von entscheidender Bedeutung: zu geringe Feuchten beeinträchtigen die Membran, zu hohe Feuchten hingegen führen zu Kondensation, was die Kanäle im Inneren der Brennstoffzelle verstopfen kann. Die Feuchte spielt insbesondere im Oxidationsmittelstrom eine große Rolle. Die Erfindung kann aber auch für andere Medienströme sinnvoll sein, insbesondere wenn der Brennstoffzelle eine Reformierung vorgeschaltet ist.

Ansätze im Stand der Technik zur Bereitstellung von Befeuchtern wiesen allerdings bislang verschiedene Mängel auf, etwa Schwierigkeiten bei der Abdichtung der Medienkanäle gegeneinander und bei der Bereitstellung einer gleichmäßigen Feuchte.

Der Erfindung liegt daher die Aufgabe zugrunde, einen Feuchtetauscher bereitzustellen, der einen gasdichten, gleichmäßigen Feuchteaustausch gestattet. Diese Aufgabe wird durch eine Befeuchtungseinrichtung mit den Merkmalen gemäß dem unabhängigen Patentanspruch 1 gelöst. Weitere vorteilhafte Ausgestaltungen, Aspekte und Details der vorliegenden Erfindung ergeben sich aus den abhängigen Ansprüchen, der Beschreibung und den beigefügten Zeichnungen.

Die Erfindung basiert auf dem grundsätzlichen Konzept, in einem Feuchtetauscher poröse Materialien in Kombination mit einer Membran zu verwenden, um kondensiertes Wasser aufzunehmen und kapillar in Richtung des Mediumstroms mit geringerer Feuchtigkeit weiter transportieren zu können, ohne dass ein Medienaustausch erfolgen kann. Dies wird durch die Kombination eines porösen Materials als Feuchteaustauscher und Feuchtespeicher und einer (gasdichten) Membran erreicht.

Die Erfindung ist in erster Linie für den Betrieb von Brennstoffzellen geeignet, kann jedoch auch bei anderen Einsatzgebieten von Gasbefeuchtern mit ähnlichen grundsätzlichen Problemen verwendet werden.

Dementsprechend ist die Erfindung gerichtet auf eine Vorrichtung zur Befeuchtung eines in mindestens einem Medienkanal befindlichen ersten Mediums durch Feuchtigkeit aus einem in zumindest einem zweiten Medienkanal befindlichen zweiten Medium, die dadurch gekennzeichnet ist, dass ein, eine Kapillar bildende Struktur und eine feuchtigkeitsdurchlässige Membran aufweisendes Trennelement, das zumindest zwei Medienkanäle zumindest über einen Teil einer gemeinsamen Kanalwandung miteinander so verbindet, dass kondensierte Feuchtigkeit durch die Kapillar bildende Struktur und die feuchtigkeitsdurchlässige Membran zum Medium geringerer Feuchtigkeit transportiert wird.

Unter einem Medienkanal ist hierbei eine mediendichte Führung zu verstehen, die der Leitung eines Mediums von einem Punkt A zu einem Punkt B dient. Über zumindest einen Teil ihrer Länge sind die zumindest zwei Medienkanäle mit unterschiedlich feuchten Medien so parallel geführt, dass sie eine gemeinsame Kanalwandung ausbilden, die zumindest einen Teil aufweist, in dem ein Trennelement angeordnet ist. Das Trennelement trennt zwischen den beiden Medienkanälen, dient insoweit also als Teil der Kanalwand, enthält jedoch eine kapillarbildende Struktur und eine feuchtigkeitsdurchlässige Membran, die dem Feuchtigkeitsaustausch bei gleichzeitiger Verhinderung eines unerwünschten Medienaustausches dient. Die kapillarbildende Struktur ist eine solche, die aufgrund ihres Aufbaus aus Einzelelementen beziehungsweise ihrer inneren Strukturierung in sich Kapillaren entwickelt, die dem Feuchtigkeitstransport dienen können. Unter einer feuchtigkeitsdurchlässigen Membran ist eine Membran zu verstehen, welche die zu transferierende Feuchtigkeit hindurch lässt, bedarfsweise jedoch andere Substanzen, wie etwa die in den Kanälen fließenden Medien sperrt.

Bei der vorliegenden Erfindung macht man sich die kapillare Wirkung der kapillarbildenden Struktur in Kombination mit dem Feuchtegefälle zu Nutze, um die Feuchtigkeit quer durch das Trennelement von einem Medienkanal zum anderen zu übertragen und dort in das Medium gehen zu lassen.

In einer bevorzugten Ausführungsform sind die Medienkanäle Teil einer Brennstoffzellenanordnung. Beispielsweise kann der erste Medienkanal eine Oxidationsmittelzufuhr für die eigentliche Brennstoffzelle sein und der zweite Medienkanal eine Oxidationsmittelabfuhr nach Durchlaufen der Brennstoffzelle mit einem reaktionsbedingt erhöhten Wassergehalt. Grundsätzlich besteht auch die Möglichkeit, die Vorrichtung in der Brennstoffzelle selbst vorzusehen, beispielsweise falls der Brennstoffzellenbrennstoff einen hohen Feuchtigkeitsgehalt aufweist und ein Teil dieser Feuchtigkeit dazu verwendet werden soll, Oxidationsmittel zu befeuchten.

Bevorzugt sind die Medien Gase, wie sie beispielsweise in Brennstoffzellen verwendet werden. Grundsätzlich können die Medien auch Flüssigkeiten sein, wobei unter Feuchtigkeit dann ein spezieller Bestandteil der Flüssigkeit, der sich von anderen Bestandteilen der Flüssigkeit unterscheidet, zu verstehen ist.

Vorzugsweise ist die übertragene Feuchtigkeit Wasser. Bei bestimmten Ausführungsformen der Erfindung kann die Feuchtigkeit auch eine andere Flüssigkeit, beispielsweise Alkohole und dergleichen, sein, sofern entsprechende Reaktions- und Umgebungsbedingungen einen solchen Feuchtigkeitstransport von Alkoholen notwendig erscheinen lassen.

Um einen problemlosen Übergang der Feuchtigkeit zwischen kapillarbildender Struktur und Membran des Teilungselements zu gestatten, sind die beiden miteinander vorzugsweise laminiert. Auch eine direkte, jedoch nicht laminierte Kontaktaufnahme ist möglich, grundsätzlich muss jedenfalls gewährleistet sein, dass die Feuchtigkeit zwischen Membran und kapillarbildender Struktur wandern kann. Bei der Laminierung ist darauf zu achten, dass die kapillarbildende innere Struktur nicht verstopft.

Bei einer vorteilhaften Gestaltung könnte die kapillarbildende Struktur eine Mehrzahl von gerichteten Kapillarröhrchen aufweisen. Beispielsweise kann bei einer bevorzugten Ausführungsform der Erfindung die kapillarbildende Struktur eine Platte mit einem Bündel aus kurzen, zwischen den Hauptoberflächen der Platte parallel verlaufenden Kapillarröhrchen aufweisen. Dieses Bündel aus kurzen parallelen Kapillarröhrchen würde aufgrund seiner im Vergleich zu amorphen porösen Materialien geringeren Widerstandskraft einen besonders leichten Feuchtigkeitstransport gestatten.

Die Kapillarröhrchen können beispielsweise aus Glas, Keramik, Metall oder Kunststoff bestehen oder können diese Materialien aufweisen.

In einer weiteren bevorzugten Ausführungsform ist die kapillarbildende Struktur zumindest eine mikroporöse Platte. Unter einer mikroporösen Platte ist hierbei eine solche Platte zu verstehen, die Poren einer solchen Größe aufweist, dass Kapillareffekte beim Feuchtigkeitstransport zustande kommen.

Die Platte kann beispielsweise aus porösem Graphit, Polymerfasern, Glasfasern, Filterpapierfasern und/oder einem porösen Metallverbund bestehen oder kann diese Materialien aufweisen.

Die kapillarbildende Struktur kann an einer Seite an der Membran anliegen. Es ist jedoch in einer bevorzugten Ausführungsform auch möglich, dass die kapillarbildende Struktur aus zwei porösen Platten besteht, die auf beiden Seiten der Membran angebracht sind, wobei as Material sowohl ein mikroporöses Material, das heißt amorph poröses Material, als auch ein Kapillarröhrchenfeld sein kann.

Auch kann die kapillarbildende Struktur zumindest zwei Platten aus porösem Material aufweisen, die sich in ihrer Kapillareigenschaft so unterscheiden, dass ein Kapillargradient in Richtung auf das erste Medium entsteht. Die beiden Platten werden aufeinander gelegt, entweder auf der einen Seite begrenzt von der Membran oder die Membran zwischen sich aufweisend, und unterscheiden sich in ihren Kapillareigenschaften hinreichend, um dadurch einen gerichteten Feuchtigkeitstransport zu gestatten. Weiterhin kann es vorteilhaft sein, dass die Vorrichtung so raumorientiert ist, dass kondensierte Feuchtigkeit durch die Gravitation zur kapillarbildenden Struktur fließt und von dieser aufgenommen wird. Kondensation kann durch eine spezielle Ausgestaltung der Vorrichtung hauptsächlich im oberen Teil auftreten (bezogen auf die Gravitation), dann kann die Feuchtigkeit durch die Gravitation in den unteren Teil fließen, wo ein Trennelement vorgesehen ist und dort von der kapillarbildenden Struktur, zum Beispiel dem porösen Material, aufgenommen werden. Eine solche Anordnung begünstigt eine gleichmäßigere Verteilung der Feuchte innerhalb des Feuchtetauschers.

Weiterhin kann es vorteilhaft sein, eine Vorrichtung bereitzustellen, bei der die kapillarbildende Struktur zumindest einen Kanal aufweist, der als Medienkanal dient oder dienen kann, wobei die kapillarbildende Struktur auf einer oder auf beiden Seiten der Membran liegen kann und dementsprechend auch Kanäle für ein oder für beide Medien aufweisen kann. Auf diese Weise dient die kapillarbildende Struktur nicht nur dem Transport von Feuchtigkeit, sondern übernimmt gleichzeitig die Funktion des Gehäuses eines Feuchtetauschers und die Feuchtigkeitstransportfunktion. Auch vergrößert das Vorsehen von Kanälen innerhalb der kapillarbildenden Struktur die Kontaktoberfläche des Mediums mit der kapillarbildenden Struktur, was den Feuchtigkeitsübertritt beschleunigt.

In einer weiteren vorteilhaften Ausgestaltung besitzen die Kanäle für das erste Medium eine geringere Querschnittsfläche als diejenigen für das zweite Medium. Auf diese Weise wird in den Kanälen für das erste Medium die Strömungsgeschwindigkeit höher und damit der hydrostatische Druck geringer. Dies kann in vorteilhafter Weise den Wassertransport zum trockenen Medium hin verbessern.

Vorteilhafterweise kann darüber hinaus die kapillarbildende Struktur im Betrieb wassergesättigt sein. Auf diese Weise wird eine Medium-abschirmende Funktion der verwendeten Membran unterstützt und entlastet damit die Anforderungen hinsichtlich der physikalischen Eigenschaften der Membran. Um die Wassersättigung der kapillarbildenden Struktur sicherzustellen, kann diese vorteilhafterweise weiterhin mit einem Flüssigkeitsvorrat so in Verbindung stehen, dass die Struktur die Flüssigkeit aus dem Vorrat durch kapillaren Transport aufnehmen kann. Dies stellt sicher, dass das erste Medium stets mit Feuchtigkeit versorgt werden kann, selbst wenn aus irgendwelchen Gründen im zweiten Medium die Feuchtigkeit zu niedrig sein sollte.

In einer besonderen Ausführungsform sind zwei röhrenförmige Medienkanäle koaxial angeordnet, wobei die gemeinsame Kanalwandung zwischen dem inneren Medienkanal und dem äußeren Medienkanal die Röhre des inneren Medienkanals ist und damit die Röhre aus einem porösen Material als kapillarbildender Struktur besteht. Diese zudem kompakte Ausführungsform gestattet es über einen längeren Verlauf des Mediumkanals einen Austausch zwischen den zwei Medien zu bewirken.

Das Trennelement kann vorteilhafterweise zusätzlich Rillen oder Kanäle zur gleichmäßigen Verteilung der Flüssigkeit in seiner kapillarbildenden Struktur aufweisen, beispielsweise indem solche Rillen direkt in der kapillarbildenden Struktur vorgesehen bzw. Kanäle in sie eingelassen sind.

Im Folgenden soll die Erfindung anhand konkretisierter Ausführungsbeispiele näher dargestellt werden, wobei auf die beigefügten Zeichnungen Bezug genommen wird, in denen Folgendes dargestellt ist:
- Figur 1: zeigt eine erste Ausführungsform einer erfindungsgemäßen Befeuchtungsvorrichtung;
- Figur 2: zeigt verschiedene Ausführungsformen der Anordnung von feuchtigkeitsdurchlässiger Membran und kapillarbildender Struktur;
- Figur 3: zeigt eine Ausführungsform der kapillarbildenden Struktur, welche aus Kapillarröhrchen besteht;
- Figur 4: zeigt eine Vorrichtung, bei der die Medienkanäle direkt in die kapillarbildende Struktur eingelassen sind;
- Figur 5: zeigt eine Ausführungsform der vorliegenden Erfindung, bei der die Medienkanäle direkt in die kapillarbildende Struktur eingelassen sind und die Membran lediglich die eine Art von Kanälen abdeckt; und
- Figur 6: zeigt eine röhrenförmige Ausführungsform einer Vorrichtung zur Befeuchtung gemäß der vorliegenden Erfindung.

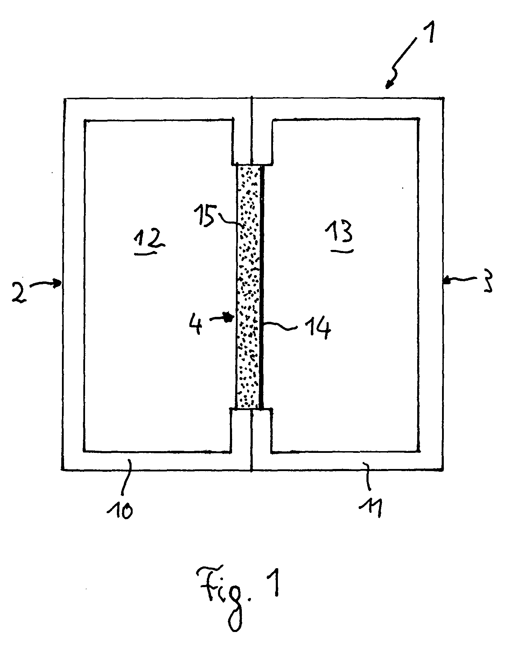

Figur 1 zeigt eine erfindungsgemäße Befeuchtungsvorrichtung 1 mit einem ersten Medienkanal 2 und einem zweiten Medienkanal 3 sowie einem Trennelement 4. Der erste Medienkanal 2 besteht aus einer eigentlichen Kanalwandung 10, die einen Hohlraum oder Kanal 12 umgrenzt. Der zweite Medienkanal 3 besteht aus einer Kanalwandung 11, die einen Kanal 13 umgrenzt. Die beiden so umgrenzten Kanäle können gleich groß oder von unterschiedlicher Größe sein, je nach konkretem Einsatzzweck. In den Kanälen strömen oder stehen Medien, die parallel oder antiparallel geführt werden können und bei der in Figur 1 gewählten Darstellung aus der Papierebene heraus beziehungsweise in diese hinein strömen.

Die beiden Medienkanäle stoßen mit einer Seite direkt aneinander, und bilden eine gemeinsame Kanalwandung. In diese Kanalwandung eingelassen ist das Trennelement 4, welches aus einer feuchtigkeitsdurchlässigen Membran 14 und einer kapillarbildenden Struktur 15 besteht, welche gemeinsam dem Feuchtigkeitsaustausch zwischen dem ersten Medienkanal 2 und dem zweiten Medienkanal 3 dienen. Es versteht sich, dass die Abfolge von Membran 14 und kapillarbildender Struktur 15 in der Figur 1 umgekehrt, das heißt seitenvertauscht, sein kann.

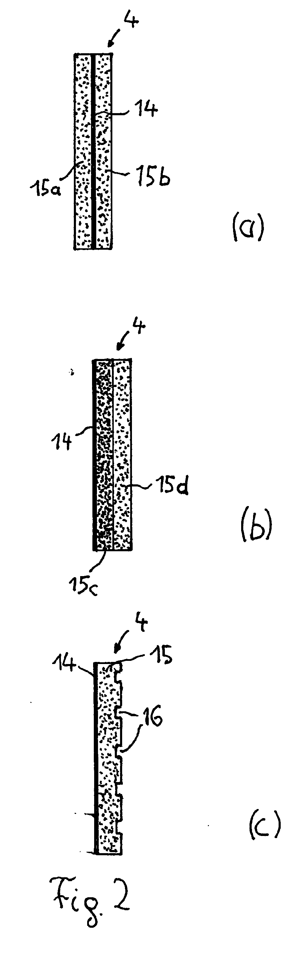

In Figur 2a ist eine alternative Ausführungsform des Trennelements 4, beispielsweise zur Verwendung in einer Befeuchtungsvorrichtung 1 gemäß Figur 1 dargestellt, bei der auf beiden Seiten der Membran 14 kapillarbildende Strukturen 15a und 15b angeordnet sind. In Figur 2b sind zwei kapillarbildende Strukturen 15c und 15d auf einer Seite der Membran 14 angeordnet, und mit dieser und miteinander verbunden. Die beiden kapillarbildenden Struktur 15c und 15d weisen unterschiedliche Kapillareigenschaften auf und fördern somit einen rascheren Transport der Feuchtigkeit, entweder in Richtung auf die Membran 14 zu oder von ihr weg.

Figur 2c zeigt ein Trennelement 4, bei dem in die kapillarbildende Struktur 15 Rillen 16 eingearbeitet sind, welche beispielsweise von den Seiten herbeifließende Feuchtigkeit, zum Beispiel Wasser, durch ihre Form oder eine spezielle Beschichtung rascher über die gesamte kapillarbildende Struktur verteilen können und damit eine gleichmäßigere Verteilung und gegebenenfalls einen schnelleren Feuchtigkeitstransport bewirken können. Die Rillen 16 können auch als nach oben geschlossene Kanäle ausgestaltet sein, wenn innerhalb der Medienkanäle eine Struktur vorgesehen sind, um die Feuchtigkeit zu diesen Kanälen hinzuleiten.

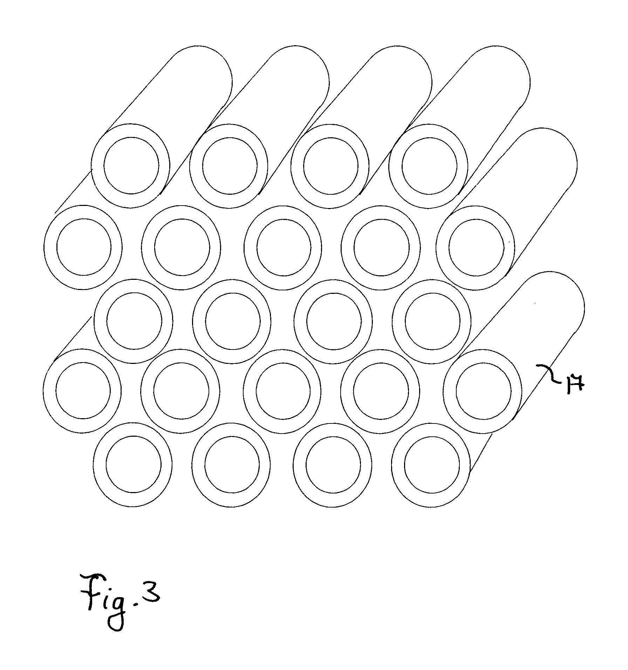

Figur 3 zeigt im Detail einen möglichen Aufbau der kapillarbildenden Struktur, beispielsweise der kapillarbildenden Struktur der Figuren 1 bis 4, aus einzelnen, parallel ausgerichteten Kapillarröhrchen 17, welche die Flüssigkeit aufgrund der in ihnen wirkenden Kapillarkräfte von einem Ende zum anderen Ende leiten können.

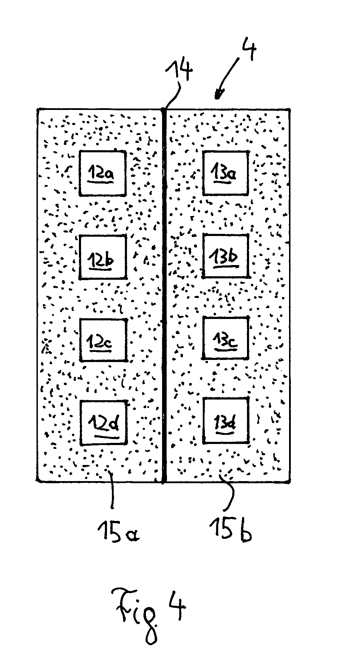

Figur 4 zeigt eine weitere Ausführungsform einer Vorrichtung zur Befeuchtung eines Mediums, bei dem die Medienkanäle direkt in der kapillarbildenden Struktur ausgearbeitet sind. Im vorliegenden Beispiel sind vier erste Kanäle 12a bis 12d vorgesehen, sowie vier zweite Kanäle 13a bis 13d, wobei zwischen den beiden mit dem Kanalsystem versehenen kapillarbildenden Strukturen die Membran 14 angeordnet ist. natürlich kann eine andere Zahl von Kanälen vorgesehen sein, von einem einzelnen Kanal 12, 13 bis hin zu Mikrokanalstrukturen. Auch ist es möglich, nur ein Medium auf diese Weise durch die kapillarbildenden Struktur zu führen und das andere Medium konventionell, wie beispielsweise in Figur 1 dargestellt. Eine solche Ausführungsform der Erfindung wäre eine Kombination der Figur 1 und Figur 4.

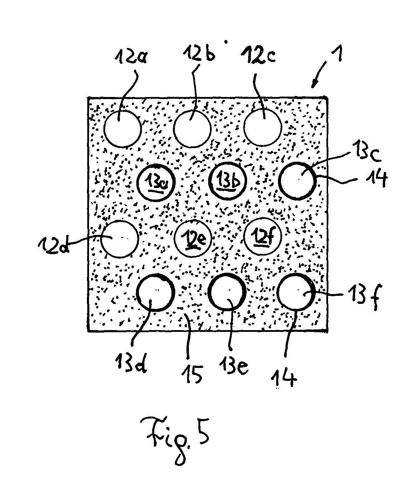

Eine noch bessere Verteilung und ein schnellerer Transport lassen sich durch ein Verschachteln der Medienkanäle gemäß Figur 5 erzielen. Hier sind sowohl die ersten (12a bis f) als auch die zweiten (13a bis f) Medienkanäle in eine gemeinsame kapillarbildende Struktur eingearbeitet, und die Kanäle in Reihen abwechselnd so angeordnet, dass der zur Verfügung stehende Block 15 gut ausgenutzt wird und die Abstände zwischen den Kanälen unterschiedlicher Arten möglichst klein sind. Da bei dieser Ausführungsform die Membran 14 nicht die beiden Kanalgruppen trennen kann, wird sie beispielsweise an der Innenwandung der zweiten Kanäle 13a bis f vorgesehen.

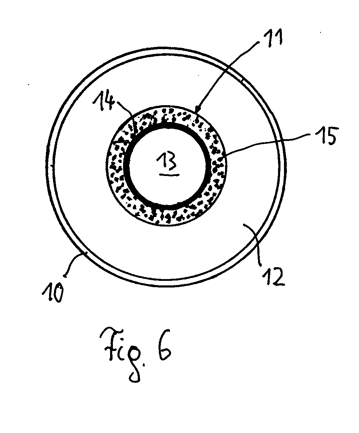

Figur 6 zeigt schließlich eine röhren- oder schlauchförmige Ausführungsform der vorliegenden Erfindung, bei der koaxial ein Mediumkanal 3 innerhalb eines Medienkanals 2 geführt wird und die zwischen ihnen ausgebildete Trennwand eine kapillarbildende Struktur 15 und eine Membran 14 auf der Außen- oder auf der Innenseite der Röhre aufweist.

## Patentansprüche

1. Vorrichtung (1) zur Befeuchtung eines in mindestens einem Medienkanal (2) befindlichen ersten Mediums durch Feuchtigkeit aus einem in zumindest einem zweiten Medienkanal (3) befindlichen zweiten Medium, **dadurch gekennzeichnet, dass** ein, eine kapillarbildende Struktur (15) und eine feuchtigkeitsdurchlässige Membran (14) aufweisendes Trennelement (4) die zumindest zwei Medienkanäle zumindest über einen Teil einer gemeinsamen Kanalwandung miteinander so verbindet, dass kondensierte Feuchtigkeit durch die kapillarbildende Struktur (15) und die feuchtigkeitsdurchlässige Membran (14) zum Medium geringerer Feuchte transportiert wird.

2. Befeuchtungsvorrichtung gemäß Anspruch 1, **dadurch gekennzeichnet, dass** die Medienkanäle Teil einer Brennstoffzellenanordnung bilden.

3. Befeuchtungsvorrichtung gemäß Anspruch 1 oder 2, **dadurch gekennzeichnet, dass** die kapillarbildende Struktur (15) und die Membran (14) miteinander laminiert sind.

4. Befeuchtungsvorrichtung gemäß einem der Ansprüche 1 bis 3, **dadurch gekennzeichnet, dass** die kapillarbildende Struktur (15) eine Mehrzahl von gerichteten Kapillarröhrchen (17), beispielsweise in Form einer Platte mit einem Bündel aus kurzen, zwischen den Hauptoberflächen der Platte parallel verlaufenden Kapillarröhrchen (17), aufweist.

5. Befeuchtungsvorrichtung gemäß einem der Ansprüche 1 bis 4, **dadurch gekennzeichnet, dass** die kapillarbildende Struktur (15) zumindest eine mikroporöse Platte ist.

6. Befeuchtungsvorrichtung (1) gemäß einem der Ansprüche 1 bis 5, **dadurch gekennzeichnet, dass** die kapillarbildende Struktur aus zwei porösen Platten (15a, 15b) besteht, die auf beiden Seiten der Membran (14) angebracht sind.

7. Befeuchtungsvorrichtung (1) gemäß einem der Ansprüche 1 bis 5, **dadurch gekennzeichnet, dass** die kapillarbildende Struktur zumindest zwei Platten (15c, 15d) aus porösem Material aufweist, die sich in ihren KapillarEigenschaften so unterscheiden, dass ein Kapillargradient in Richtung auf das erste Medium entsteht.

8. Befeuchtungsvorrichtung (1) gemäß einem der Ansprüche 1 bis 7, **dadurch gekennzeichnet, dass** die Vorrichtung (1) so im Raum orientiert ist, dass kondensierte Feuchtigkeit durch die Gravitation zur kapillarbildenden Struktur (15) fließt und von dieser aufgenommen wird.

9. Befeuchtungsvorrichtung (1) gemäß einem der Ansprüche 1 bis 8, **dadurch gekennzeichnet, dass** die auf zumindest einer Seite der Membran ausgebildete kapillarbildende Struktur (15a, 15b) zumindest einen Kanal (12a-d, 13a-d, 12e, 12f, 13e, 12f) aufweist, der als Medienkanal (2, 3) dient oder dienen kann.

10. Befeuchtungsvorrichtung (1) gemäß Anspruch 9, **dadurch gekennzeichnet, dass** die kapillarbildende Struktur auf beiden Seiten der Membran (14) angeordnet ist, auf jeder Seite zumindest einen Kanal aufweist, der als Medienkanal für jeweils ein Medium dient und die Kanäle (12a-f) für das erste Medium eine geringere Querschnittsfläche besitzen als diejenigen (13a-f) für das zweite Medium.

11. Befeuchtungsvorrichtung (1) gemäß einem der Ansprüche 1 bis 10, **dadurch gekennzeichnet, dass** die kapillarbildende Struktur (15) im Betrieb wassergesättigt ist.

12. Befeuchtungsvorrichtung (1) gemäß Anspruch 11, **dadurch gekennzeichnet, dass** die kapillarbildende Struktur (15) mit einem Flüssigkeitsvorrat so in Verbindung steht, das die Struktur (15) die Flüssigkeit aus dem Vorrat durch kapillaren Transport aufnehmen kann.

13. Befeuchtungsvorrichtung (1) gemäß einem der Ansprüche 1 bis 7, **dadurch gekennzeichnet, dass** zwei röhrenförmige Medienkanäle (2, 3) koaxial angeordnet sind, wobei die gemeinsame Kanalwandung die Röhre (11) des inneren Medienkanals (13) ist und die Röhre (11) aus einem porösen Material als kapillarbildender Struktur (15) und einer Membran (14) besteht.
